# EUROPEAN PATENT SPECIFICATION

(11) **EP 3 443 801 B1**
(45) Date of publication and mention of the grant of the patent: **06.01.2021**
(21) Application number: 16716860.8
(22) Date of filing: 15.04.2016
(51) Int. Cl.: H04W 72/14, H04W 72/02, H04W 74/08

(54) **SYSTEMS AND METHODS RELATING TO GRANTING TRANSMISSIONS IN A MULTI-CARRIER DYNAMIC TIME DIVISION DUPLEXING (TDD) CELLULAR COMMUNICATIONS SYSTEM**
SYSTEME UND VERFAHREN ZUR GEWÄHRUNG VON ÜBERTRAGUNGEN IN EINEM ZELLULAREN KOMMUNIKATIONSSYSTEM MIT DYNAMISCHEM ZEITDUPLEXING (TDD) MIT MEHREREN TRÄGERN
SYSTÈMES ET PROCÉDÉS CONCERNANT L'OCTROI DE TRANSMISSIONS DANS UN SYSTÈME DE COMMUNICATION CELLULAIRE À DUPLEXAGE PAR RÉPARTITION DANS LE TEMPS (TDD) DYNAMIQUE À PORTEUSES MULTIPLES

(43) Date of publication of application: 20.02.2019
(73) Proprietor: Telefonaktiebolaget LM Ericsson (publ), 164 83 Stockholm (SE)
(72) Inventor: HESSLER, Martin, 587 58 Linköping (SE); ERIKSSON, Erik, 585 93 Linköping (SE); FRENGER, Pål, 583 34 Linköping (SE); FRÖBERG OLSSON, Jonas, 590 74 Ljungsbro (SE)
(74) Representative: Zacco Sweden AB
(86) International application number: PCT/EP2016/058316
(87) International publication number: WO 2017/178062

(56) References cited:
- EP-A1- 2 947 791
- WO-A1-2016/006779
- WO-A2-2013/192601
- US-A1- 2014 086 112
- US-A1- 2015 181 589

## Description

### Technical Field

The present disclosure relates to a multi-carrier half-duplex Time Division Duplexing (TDD) cellular communications system and, in particular, to a flexible scheme for granting transmissions in a multi-carrier dynamic TDD cellular communications system.

### Background

Half-Duplex Time-Division Duplexing (TDD) (which is sometimes referred to herein simply as TDD) is a well-known radio access technology in which uplink (UL) and downlink (DL) transmissions are sent over a half-duplex channel in which the UL and DL transmissions are multiplexed in time. For Third Generation Partnership Project (3GPP) Long Term Evolution (LTE) systems, TDD operation has until recently been limited to a semi-static mode in which subframes are divided into DL and UL subframes according to a configured pattern. This pattern can change on a slow basis (i.e., the pattern is semi-static). For systems, such as Wireless Local Area Network (WLAN), that are based on the Institute of Electrical and Electronics Engineers (IEEE) 802.11 standards (which are known as Wi-Fi networks), employing contention-based access, the carrier is dynamic in the sense that DL and UL transmissions compete for access to the carrier using a Listen-Before-Talk (LBT) mechanism.

In Fifth Generation (5G) systems, operating a carrier in a dynamic TDD mode will be a key enabler to support massive Multiple-Input-Multiple-Output (MIMO) and enable fast adaptation to variations in DL and UL load.

US 2014/086112 A1 discloses a method and apparatus for Time Division Duplex (TDD) operation in a wireless transmit/receive unit (WTRU).

WO 2016/006779 A1 discloses a method for UE-flexible Time Division Duplex (TDD) mode communication in a network configured to support a UE-flexible

TDD mode in which a base station (BS) operates in a full duplex mode and the UE operates in a half duplex mode.

US 2015/181589 A1 discloses that an orthogonal frequency-division multiple access (OFDMA) configuration of an uplink channel is identified for communications in an unlicensed radio frequency spectrum band.

WO 2013/192601 A2 discloses techniques provided for aggregating carriers with different carrier configurations.

EP 2947791 A1 discloses a method and apparatus for providing a User Equipment with TDD configuration information effectively and determining uplink transmission timing in a mobile communication system supporting TDD.

### Summary

The invention is defined by the independent claims. Furthermore, the embodiments of the invention are those defined by the claims. Moreover, examples, aspects and embodiments, which are not covered by the claims are presented not as embodiments of the invention, but as background art or examples useful for understanding the invention. Systems and methods relating to providing an uplink (UL) grant to a wireless device (e.g., a User Equipment device (UE)) in a multi-carrier, dynamic Time Division Duplexing (TDD) system are disclosed. In some embodiments, a method of operation of a radio node in a cellular communications network comprises receiving a grant that grants a communication of data on any of a set of two or more TDD carriers, and receiving an indication that indicates a carrier mode of one or more TDD carriers in the set of two or more TDD carriers. The method further comprises determining, based on the indication, one or more TDD carriers of the set of two or more TDD carriers to use for the communication in accordance with the grant, and performing the communication of the data on the determined one or more TDD carriers in accordance with the grant. By providing the grant for the set of two or more TDD carriers and subsequently providing the indication of the carrier mode of one or more of the TDD carriers in the set of two or more TDD carriers, a scheduler implemented in the cellular communications network (e.g., in a radio access node) has greater flexibility in scheduling UL and downlink (DL) transmissions in the multi-carrier dynamic TDD system, since the carrier may be selected shortly before the communication may take place. In this context, a "dynamic TDD system" may relate to the fact that a transmit direction of a certain TDD subframe may change dynamically and it can thus not be deduced in advance if it is DL or UL, respectively.

In some embodiments, receiving the grant comprises receiving the grant in a first subframe, wherein the communication granted by the grant is for a second subframe that is subsequent, in time, to the first subframe; and receiving the indication comprises receiving the indication in a third subframe that is subsequent, in time, to the first subframe and prior, in time, to the second subframe.

In some embodiments, receiving the indication comprises receiving the indication via a DL Control Information (DCI) message.

In some embodiments, the set of two or more TDD carriers is identified in the grant. In other embodiments, the set of two or more TDD carriers is pre-configured.

In some embodiments, the radio node is a wireless device, and the grant is a UL grant that grants a UL transmission of data. In other embodiments, the radio node is a wireless device, and the grant is a Device-to-Device (D2D) grant that grants transmission of data from the wireless device to another wireless device. In some other embodiments, the radio node is a relay node, and the grant is a relay grant that grants DL transmission of data to a wireless device. In some other embodiments, the radio node is a relay node, and the grant is a relay grant that grants DL reception of a UL transmission of data from a wireless device to the relay node. In some embodiments, the radio node is a relay node, and the grant is a relay grant that delegates, to the relay node, a decision as to whether to transmit a DL transmission of data to a wireless device or receive a UL transmission of data from a wireless device on any of the set of two or more TDD carriers.

In some embodiments, determining the one or more TDD carriers comprises determining the one or more TDD carriers based on the indication and at least one additional parameter. Further, in some embodiments, the at least one additional parameter comprises signal quality. In some embodiments, the at least one additional parameter comprises a Listen-Before-Talk (LBT) result that is indicative of whether at least one of the TDD carriers in the set of two or more TDD carriers is free for transmission.

In some embodiments, the indication is an explicit indication such as, for example, a control information element in, e.g., a DCI message. In other embodiments, the indication is an implicit indication. As an example of an implicit indication, if there are two carriers in a subframe SF, a detection of one or more DL reference signals on a TDD carrier indicates that subframe *SF* + *1* for that TDD carrier is a UL subframe.

In some embodiments, the grant is a grant for a transmission of data on any of the set of two or more TDD carriers. In other embodiments, the grant is a grant for a reception of data on any of the set of two or more TDD carriers.

Embodiments of a radio node for a cellular communications network are also disclosed. In some embodiments, a radio node comprises one or more transmitters, one or more receivers, one or more processors, memory storing instructions executable by the one or more processors whereby the radio node is operable to function as follows. The radio node receives, via the one or more receivers, a grant that grants a communication of data on one of a set of two or more TDD carriers. The radio node further receives, via the one or more receivers, an indication that indicates a carrier mode of one or more TDD carriers in the set of two or more TDD carriers. The radio node determines, based on the indication, one or more TDD carriers of the set of two or more TDD carriers to use for the communication in accordance with the grant, and performs the communication of the data, via the one or more transmitters or the one or more receivers, on the determined one or more TDD carriers in accordance with the grant.

In some embodiments, via execution of the instructions by the one or more processors, the radio node is further operable to receive the grant in a first subframe, where the communication granted by the grant is for a second subframe that is subsequent, in time, to the first subframe and receive the indication in a third subframe that is subsequent, in time, to the first subframe and prior, in time, to the second subframe.

In some embodiments, the indication is received via a DCI message.

In some embodiments, the set of two or more TDD carriers is identified in the grant. In other embodiments, the set of two or more TDD carriers is pre-configured.

In some embodiments, the radio node is a wireless device, and the grant is a UL grant that grants a UL transmission of data. In other embodiments, the radio node is a wireless device, and the grant is a D2D grant that grants transmission of data from the wireless device to another wireless device. In other embodiments, the radio node is a relay node, and the grant is a relay grant that grants DL transmission of data to a wireless device. In other embodiments, the radio node is a wireless device, and the grant is a relay grant that delegates, to the relay node, a decision as to whether to transmit a DL transmission of data to a wireless device or receive a UL transmission of data from a wireless device on any of the set of two or more TDD carriers.

In some embodiments, the radio node is further operable to determine the one or more TDD carriers based on the indication and at least one additional parameter. Further, in some embodiments, the at least one additional parameter comprises signal quality. In some embodiments, the at least one additional parameter comprises a LBT result that is indicative of whether at least one of the TDD carriers in the set of two or more TDD carriers is free for transmission.

In some embodiments, the grant is a grant for transmission of data on any of the set of two or more TDD carriers. In other embodiments, the grant is a grant for a reception of data on any of the set of two or more TDD carriers.

In some embodiments, a radio node for a cellular communications network is provided, wherein the radio node is adapted to receive a grant that grants a communication of data on any of a set of two or more TDD carriers. Subsequent in time to receiving the grant, the radio node is adapted to receive an indication that indicates a carrier mode of one or more TDD carriers in the set of two or more TDD carriers. The radio node is further adapted to determine, based on the indication, one or more TDD carriers of the set of two or more TDD carriers to use for the communication in accordance with the grant, perform the communication of the data on the determined one or more TDD carriers in accordance with the grant.

In some embodiments, a radio node for a cellular communications network is provided, wherein the radio node is adapted to perform the method of any of the embodiments described herein.

In some embodiments, a radio node for a cellular communications network is provided, wherein the radio node comprises means for receiving a grant that grants a communication of data on any of a set of two or more TDD carriers. The radio node further comprises means for receiving, subsequent in time to receiving the grant, an indication that indicates a carrier mode of one or more TDD carriers in the set of two of more TDD carriers. The radio node further comprises means for determining, based on the indication, one or more TDD carriers of the set of two or more TDD carriers to use for the communication in accordance with the grant, and means for performing the communication of the data on the determined one or more TDD carriers in accordance with the grant.

In some embodiments, a radio node for a cellular communications network is provided, wherein the radio node comprises a first receiving module, a second receiving module, a determining module, and a performing module. The first receiving module is operable to receive a grant that grants a communication of data on any of a set of two or more TDD carriers. The second receiving module is operable to receive an indication that indicates a carrier mode of one or more TDD carriers in the set of two of more TDD carriers. The determining module is operable to determine, based on the indication, one or more TDD carriers of the set of two or more TDD carriers to use for the communication in accordance with the grant; and the performing module is operable to perform the communication of the data on the determined one or more TDD carriers in accordance with the grant.

Embodiments of a non-transitory computer readable medium are also disclosed. In some embodiments, the non-transitory computer readable medium stores software instructions that when executed by one or more processors of a radio node cause the radio node to: receive a grant that grants a communication of data on any of a set of two or more TDD carriers and receive an indication that indicates a carrier mode of one or more TDD carriers in the set of two of more TDD carriers. When executed by the one or more processors, the software instructions further cause the radio node to determine, based on the indication, one or more TDD carriers of the set of two or more TDD carriers to use for the communication in accordance with the grant, and perform the communication of the data on the determined one or more TDD carriers in accordance with the grant.

In some embodiments, a computer program is provided, wherein the computer program comprises instructions which, when executed by at least one processor, cause the at least one processor to carry out the method according to any one the embodiments described herein. In some embodiments, a carrier comprising the aforementioned computer program is provided, wherein the carrier is one of an electronic signal, an optical signal, a radio signal, or a computer readable storage medium.

Embodiments of a method of operation of a radio access node in a cellular communications network are also disclosed. In some embodiments, the method of operation of the radio access node comprises transmitting a grant that grants a communication of data on any of a set of two or more TDD carriers, and transmitting an indication that indicates a carrier mode of one or more TDD carriers in the set of two or more TDD carriers.

In some embodiments, transmitting the grant comprises transmitting the grant in a first subframe, wherein the communication granted by the grant is for a second subframe that is subsequent, in time, to the first subframe, and transmitting the indication comprises transmitting the indication in a third subframe that is subsequent, in time, to the first subframe and prior, in time, to the second subframe.

In some embodiments, transmitting the indication comprises transmitting the indication via a DCI message.

In some embodiments, the set of two or more TDD carriers is identified in the grant. In other embodiments, the set of two or more TDD carriers is pre-configured.

In some embodiments, the radio node is a wireless device, and the grant is a UL grant that grants a UL transmission of data. In some other embodiments, the radio node is a wireless device, and the grant is a D2D grant that grants transmission of data from the wireless device to another wireless device. In some other embodiments, the radio node is a relay node, and the grant is a relay grant that grants DL transmission of data to a wireless device. In some embodiments, the radio node is a relay node, and the grant is a relay grant that grants DL transmission of data to a wireless device. In some embodiments, the radio node is a relay node, and the grant is a relay grant that delegates, to the relay node, a decision as to whether to transmit a DL transmission of data to a wireless device or receive a UL transmission of data from a wireless device on any of the set of two or more TDD carriers.

Embodiments of a radio access node for a cellular communications network are also disclosed. In some embodiments, the radio access node comprises one or more transmitters, one or more processors, and memory storing instructions executable by the one or more processors whereby the radio access node is operable to: transmit, to a radio node via the one or more transmitters, a grant that grants a communication of data on any of a set of two or more TDD carriers; and transmit, to the radio node via the one or more transmitters, an indication that indicates a carrier mode of one or more TDD carriers in the set of two or more TDD carriers.

In some embodiments, via execution of the instructions by the one or more processors, the radio access node is further operable to: transmit the grant in a first subframe, where the communication granted by the grant is for a second subframe that is subsequent, in time, to the first subframe; and transmit the indication in a third subframe that is subsequent, in time, to the first subframe and prior, in time, to the second subframe.

In some embodiments, the indication is transmitted via a DCI message.

In some embodiments, the set of two or more TDD carriers is identified in the grant. In other embodiments, the set of two or more TDD carriers is pre-configured.

In some embodiments, the radio node is a wireless device, and the grant is a UL grant that grants a UL transmission of data. In other embodiments, the radio node is a wireless device, and the grant is a D2D grant that grants transmission of data from the wireless device to another wireless device. In some other embodiments, the radio node is a relay node, and the grant is a relay grant that grants DL transmission of data to a wireless device. In some embodiments, the radio node is a relay node, and the grant is a relay grant that grants reception of a UL transmission of data from a wireless device to the relay node. In some embodiments, the radio node is a relay node, and the grant is a relay grant that delegates, to the relay node, a decision as to whether to transmit a DL transmission of data to a wireless device or receive a UL transmission of data from a wireless device on any of the set of two or more TDD carriers.

In some embodiments, a radio access node for a cellular communications network is provided. The radio node is adapted to transmit a grant that grants a communication of data on any of a set of two or more TDD carriers. The radio node is further adapted to transmit an indication that indicates a carrier mode of one or more TDD carriers in the set of two or more TDD carriers.

In some embodiments, a radio access node for a cellular communications network is provided, wherein the radio node is adapted to perform the method of any of the embodiments described herein.

In some embodiments, a radio access node for a cellular communications network is provided. The radio node comprises means for transmitting, to a radio node, a grant that grants a communication of data on any of a set of two or more TDD carriers. The radio node further comprises means for transmitting, to the radio node, an indication that indicates a carrier mode of one or more TDD carriers in the set of two or more TDD carriers.

In some embodiments, a radio access node for a cellular communications network is provided, wherein the radio node comprises a first transmitting module and a second transmitting module. The first transmitting module is operable to transmit, to a radio node, a grant that grants a communication of data on any of a set of two or more TDD carriers. The second transmitting module is operable to transmit, to the radio node, an indication that indicates a carrier mode of one or more TDD carriers in the set of two or more TDD carriers.

Embodiments of a non-transitory computer readable medium are also disclosed. In some embodiments, the non-transitory computer readable medium stores software instructions that when executed by one or more processors cause a radio access node to: transmit, to a radio node, a grant that grants a communication of data on any of a set of two or more TDD carriers; and transmit, to the radio node, an indication that indicates a carrier mode of one or more TDD carriers in the set of two or more TDD carriers.

Embodiments of a computer program are also disclosed, wherein the computer program comprises instructions which, when executed on at least one processor, cause the at least one processor to carry out the method according to any of the methods disclosed herein. In some embodiments, a carrier comprising the aforementioned computer program is disclosed, wherein the carrier is one of an electronic signal, an optical signal, a radio signal, or a computer readable storage medium.

Those skilled in the art will appreciate the scope of the present disclosure and realize additional aspects thereof after reading the following detailed description of the embodiments in association with the accompanying drawing figures.

### Brief Description of the Drawings

The accompanying drawing figures incorporated in and forming a part of this specification illustrate several aspects of the disclosure, and together with the description serve to explain the principles of the disclosure.
Figure 1 illustrates conventional dynamic Time Division Duplexing (TDD) operation in a current Third Generation Partnership Project (3GPP) Long Term Evolution (LTE) network;
Figure 2 illustrates one example of a cellular communications network including a base station that provides multiple cells operating on respective carriers, wherein at least some of the carriers are dynamic TDD carriers according to some embodiments of the present disclosure;
Figure 3 is a flow chart that illustrates the operation of a radio access node (e.g., the base station of Figure 2), to provide an uplink (UL) grant according to some embodiments of the present disclosure;
Figure 4 is a flow chart that illustrates the operation of the wireless device (e.g., the wireless device of Figure 2) to receive and process a UL grant according to some embodiments of the present disclosure;
Figure 5 is an illustration of one example of a scenario in which the UL grant of Figures 3 and 4 is transmitted by the radio access node and received by the wireless device on a first TDD carrier in a fifth subframe and an indication of the carrier mode of the scheduled subframe for at least one of the first and second TDD carriers is transmitted in the subframe immediately preceding the scheduled subframe according to some embodiments of the present disclosure;
Figure 6 illustrates the operation of a base station and a wireless device according to some embodiments of the present disclosure;
Figure 7 illustrates one example of a process in which embodiments of the present disclosure are implemented with respect to a relay grant and relay transmission of a relay node according to some embodiments of the present disclosure;
Figure 8 illustrates an example in which aspects of the present disclosure are implemented with respect to Device-to-Device (D2D) communication between wireless devices according to some embodiments of the present disclosure;
Figures 9 through 11 illustrate various embodiments of a radio access node according to some embodiments of the present disclosure; and
Figures 12 and 13 illustrate various embodiments of a wireless device according to some embodiments of the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

**Radio Node:** As used herein, a "radio node" is either a radio access node or a wireless device.

**Radio Access Node:** As used herein, a "radio access node" is any node in a radio access network of a cellular communications network that operates to wirelessly transmit and/or receive signals. Some examples of a radio access node include, but are not limited to, a base station (e.g., an enhanced or evolved Node B (eNB) in a Third Generation Partnership Project (3GPP) Long Term Evolution (LTE) network), a high-power or macro base station, a low-power base station (e.g., a micro base station, a pico base station, a home eNB, or the like), and a relay node.

**Wireless Device:** As used herein, a "wireless device" is any type of device that has access to (i.e., is served by) a cellular communications network by wirelessly transmitting and/or receiving signals to a radio access node(s). Some examples of a wireless device include, but are not limited to, a User Equipment device (UE) in a 3GPP LTE network and a Machine Type Communication (MTC) device.

**Network Node:** As used herein, a "network node" is any node that is either part of the radio access network or the core network of a cellular communications network/system.

**Carrier Mode:** As used herein, a "carrier mode" of a Time Division Duplexing (TDD) carrier is a transmit direction of the TDD carrier for a respective interval of time (e.g., a Transmit Time Interval (TTI) or subframe).

Note that the description given herein focuses on a 3GPP cellular communications system and, as such, 3GPP LTE terminology or terminology similar to 3GPP LTE terminology is oftentimes used. However, the concepts disclosed herein are not limited to a 3GPP system.

Note that, in the description herein, reference may be made to the term "cell;" however, particularly with respect to Fifth Generation (5G) concepts, beams may be used instead of cells and, as such, it is important to note that the concepts described herein are equally applicable to both cells and beams.

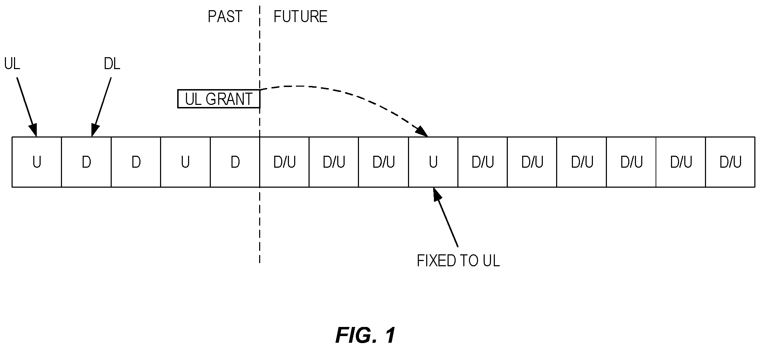

Currently, 3GPP LTE defines a dynamic TDD mode of operation in which all subframes are typically defined as downlink (DL) subframes unless the subframe is explicitly defined as a scheduled uplink (UL) subframe. As illustrated in Figure 1, a UL grant is sent in a DL subframe, say SF = n, granting a future UL transmission in a UL subframe, say SF = *n* + *X,* where typically *X* = 4. Here, SF is the abbreviation for subframe. In other words, the transmission of the UL grant in subframe n fixes the time for the granted UL transmission in subframe *n* + *X.* This imposes restrictions in the dynamic TDD operation which results in less flexibility for the scheduler. The scheduler hence needs to determine the TDD scheme in advance (e.g., four subframes prior to the subframe in which the UL transmission is granted). Once the UL grant has been transmitted, the scheduler cannot revoke the decision if, e.g., time-critical data arrives. As such, there is a need for systems and methods that provide improved flexibility for the scheduler for a TDD carrier for a dynamic TDD mode of operation in a multi-carrier communication.

Embodiments of the present disclosure relate to providing a grant to a radio node (e.g., a UE or a relay node) in a multi-carrier, dynamic TDD system. In some embodiments, the grant is a UL grant provided to a wireless device. However, in other embodiments, the grant is a relay grant for a communication of data (e.g., a UL transmission of data or a DL transmission of data) for a relay node. In general, in some embodiments, a grant is provided to a radio node that grants a communication (i.e., a transmission of data or a reception of data, depending on the embodiment) for the radio node in a multi-carrier TDD system including multiple TDD carriers, but wherein the TDD carrier to be used for the UL transmission is determined, after the UL transmission has been granted. Further, in some embodiments, the radio node performs carrier determination based on an indication (e.g., an explicit indication or an implicit indication) of a carrier mode of one or more of the TDD carriers. Still further, in some embodiments, the radio node performs carrier determination based on the indication of the carrier mode of one or more of the TDD carriers and a Listen-Before-Talk (LBT) result for one or more of the TDD carriers (e.g., one or more of the TDD carriers in an unlicensed frequency band such as, e.g., the 5 gigahertz (GHz) frequency band). LBT (which, e.g., requires the UE to monitor a TDD carrier for a predefined LBT period to determine whether the TDD carrier is free for transmission or busy before transmitting) enables, for example, user prioritization as well as the possibility to revoke or delay a previously assigned UL transmission grant. The result of the LBT procedure for a respective TDD carrier indicates whether the TDD carrier is free or busy.

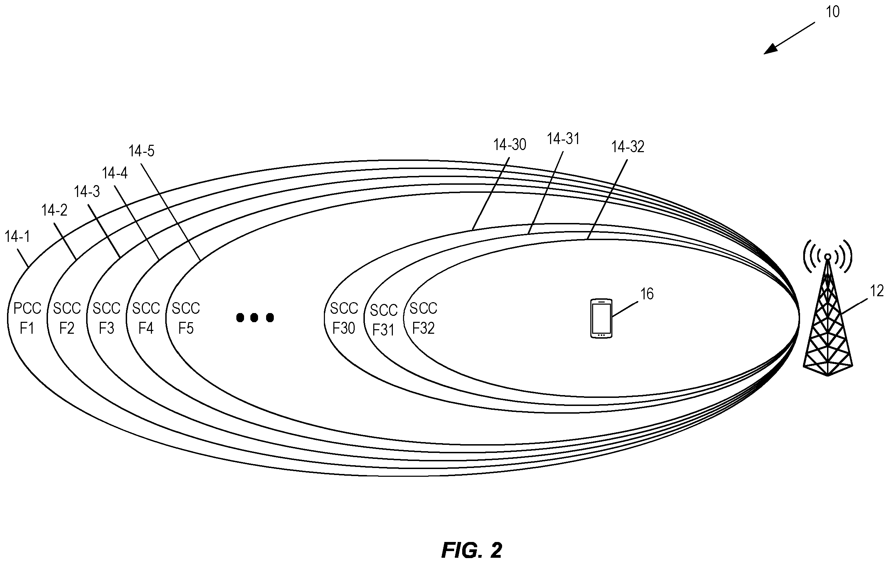

Much of the discussion herein focuses on embodiments in which a UL grant is provided to a wireless device in a multi-carrier dynamic TDD system. In this regard, Figure 2 illustrates one example of a cellular communications network 10 that includes a base station 12 (e.g., an eNB) that operates to serve a number of cells 14-1 through 14-32 (generally referred to herein collectively as cells 14 and individually as cell 14), each operating on a different carrier or carrier frequency (F1 through F32). Wireless devices, such as wireless device 16, located in the cells 14 operate to transmit signals to and receive signals from the base station 12. In this example, the cell 14-1 is configured as a Primary Component Carrier (PCC) of the wireless device 16, and the other cells 14-2 through 14-32 (or at least some of the other cells 14-2 through 14-32) are configured as Secondary Component Carriers (SCCs) of the wireless device 16. At least some of the carriers of the cells 14 are dynamic TDD carriers, and the wireless device 16 is operable to transmit UL data transmissions on at least two or more of the TDD carriers.

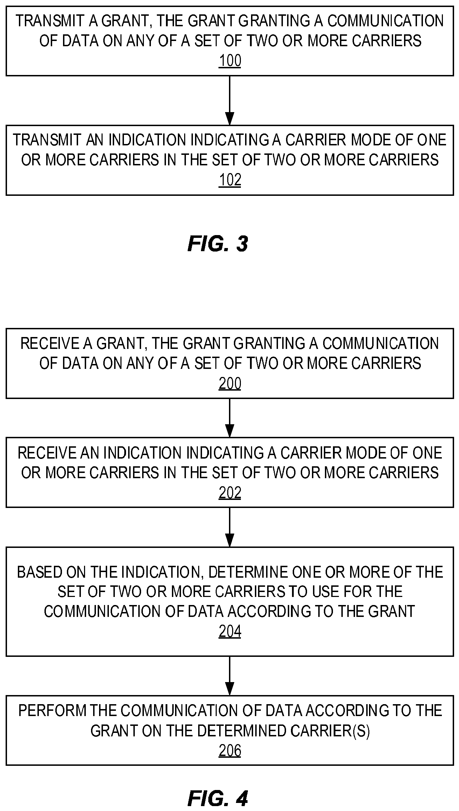

Figure 3 is a flow chart that illustrates the operation of a radio access node (e.g., the base station 12 of Figure 2) to provide a grant to a radio node (e.g., the wireless device 16 or a relay node, as described below) for a communication of data (e.g., a UL grant for a UL transmission of data from the wireless device 16 to the base station 12, a relay grant for either a DL transmission of data from the relay node to the wireless device 16 or a UL reception of data at the relay node from the wireless device, or a Device-to-Device (D2D) grant for a D2D transmission of data from the wireless device 16 to another wireless device 16) according to some embodiments of the present disclosure.

As illustrated, the radio access node first transmits a grant to radio node (e.g., the wireless device 16 or a relay node) that grants a communication of data on any of a set of two or more TDD carriers (step 100). Which of the TDD carriers that is to be used for the communication of data is unspecified by the grant. In other words, the grant does not specify which of the set of two or more TDD carriers is to be used by the radio access node for the granted communication. In some embodiments, the granted communication is a transmission of data (e.g., a UL grant is transmitted to the wireless device 16 for a UL transmission or a DL grant is transmitted to a relay node for a DL transmission to the wireless device 16). In other embodiments, the granted communication is a reception of data (e.g., a relay grant is transmitted to a relay node granting a UL reception at the relay node for a UL transmission from the wireless device 16).

Subsequently to transmitting the grant, the radio access node transmits an indication to the radio node that indicates a carrier mode of at least one of the TDD carriers in the set of two or more TDD carriers (step 102). Here, the carrier mode of the TDD carrier is the transmit direction (i.e., UL or DL) of the TDD carrier for the respective subframe, which in this example is the subframe for which the communication has been granted to the radio node via the grant in step 100. In some embodiments, the indication is an explicit indication such as, for example, a control information element in, e.g., a DL Control Information (DCI) message; while in other embodiments, the indication is an implicit indication. As an example of an implicit indication, if there are two carriers in a subframe SF, a detection of one or more DL reference signals on a TDD carrier indicates that subframe *SF* + *1* for that TDD carrier is a UL subframe. Further examples are described below.

As an example of the timing of the grant in step 100, which for this example is a UL grant for the wireless device 16, and the timing of the indication in step 102, the base station 12 first transmits the UL grant to the wireless device 16 in subframe Xto thereby grant a UL transmission to the wireless device 16 on any one of the set of TDD carriers in subframe *X* + *N*, where *N* may be, for example, 4. The base station 12 (or alternatively some other radio access node) subsequently transmits, to the wireless device 16, the indication of the carrier mode of at least one of the TDD carriers in the set TDD carriers in subframe Y, where subframe Yis after subframe *X* but before subframe *X* + *N.* In this manner, the base station 12 has greater flexibility in scheduling since the carrier for the UL grant is not fixed at the time of transmitting the UL grant in subframe *N.*

Notably, in the example of Figure 3, both the grant in step 100 and the indication in step 102 are transmitted by the same radio access node. However, the present disclosure is not limited thereto. In some other embodiments, the grant in step 100 and the indication in step 102 are transmitted from different radio access nodes. Suppose the first radio access node sends the grant to the wireless device in subframe X granting a UL transmission in subframe X+N. The first radio access node informs the second node that it has granted a UL transmission in subframe X+N. The first radio access node has no need for any of the carriers for anything other than receiving the transmission from the wireless device while the second radio access node desires to use one of the carriers in subframe X+N for a DL transmission to another wireless device. Therefore the second radio access node sends the indication indicating the carrier mode of the desired carrier.

Figure 4 is a flow chart that illustrates the operation of a radio node (e.g., the wireless device 16 or a relay node) to receive and process a grant (e.g., a UL grant, a relay grant for DL transmission, a relay grant for UL reception, or a D2D grant for a D2D transmission from one wireless device 16 to another wireless device 16) according to some embodiments of the present disclosure. In particular, where Figure 3 illustrates the operation of the radio access node, Figure 4 illustrates the operation of the radio node in receipt of the grant. As discussed above, the radio node supports transmission and/or reception on multiple carriers, e.g., according to a Carrier Aggregation (CA) scheme.

As illustrated, the radio node receives a grant for a communication of data on any of a set of two or more TDD carriers (step 200). Note that while the carriers are referred to herein as TDD carriers, the TDD carriers may also be referred to as half-duplex carriers or carriers operating in a half-duplex mode. The grant does not directly specify which carrier from the set of two or more TDD carriers is to be used for the granted communication. Again, the granted communication may be a transmission of data or a reception of data.

Sometime thereafter, the radio node receives an indication that indicates a carrier mode of at least one of the carriers in the set of two or more TDD carriers (step 202). Notably, in some embodiments, the radio node receives the indication from the same radio access node from which it received the grant in step 200. However, in other embodiments, the radio node receives the indication from a different radio access node than that from which it received the grant in step 200. Again, the carrier mode of the TDD carrier is the transmit direction (i.e., UL or DL) of the TDD carrier for the respective subframe, which in this example is the subframe for which the communication has been granted to the radio node via the grant in step 200. As discussed above, in some embodiments, the indication is an explicit indication such as, for example, a control information element in, e.g., a DCI message; while in other embodiments the indication is an implicit indication, e.g. a detection of DL reference signals as discussed above.

The radio node determines one or more TDD carriers of the set of two or more TDD carriers to use for the granted communication based on the indication (step 204). In other words, the radio node determines, based on the indication, which of the set of two or more TDD carriers to use as the TDD carrier(s) for the granted communication. The determination of the TDD carrier(s) to use for the granted communication may be further based on one or more additional parameters. The one or more additional parameters may include, for example, signal quality on the respective TDD carriers, an LBT result indicating the availability (e.g., clear/available or busy/in-use) for at least one of the TDD carriers in the set), and/or some other parameter(s) such as, e.g., signal quality.

In some embodiments, the TDD carrier to be used for the granted communication is determined directly by the indication. For example, if the radio node is the wireless device 16 and the granted communication is a granted UL transmission for the wireless device 16, the set of TDD carriers consists of two carriers C1 and C2, and the indication is an indication that carrier C1 is DL (i.e., that, for carrier C1, the subframe for the granted communication is configured as a DL subframe), then the indication is a direct indicator that the wireless device 16 is to use carrier C2 for the granted UL transmission. As another example, if the radio node is the wireless device 16 and the granted communication is a granted UL transmission for the wireless device 16, the set of TDD carriers consists of two carriers C1 and C2, and the indication is an indication that carrier C1 is UL (i.e., that, for carrier C1, the subframe for the granted UL transmission is configured as a UL subframe), then the indication is a direct indicator that the wireless device 16 is to use carrier C1 for the granted UL transmission. Thus, in some embodiments, the determined TDD carrier(s) can be one or more of the at least one TDD carrier for which the indication indicates the carrier mode in step 202. Once the TDD carrier(s) to use for the granted communication is determined, the radio node then performs the granted communication in the appropriate subframe on the determined TDD carrier(s) (step 206).

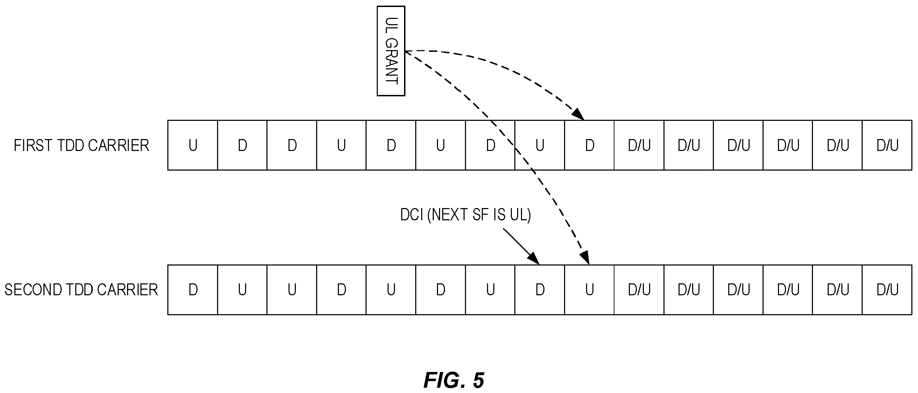

Figure 5 is an illustration of one example of a scenario in which the grant of steps 100 and 200 of Figures 4 and 5 is a UL grant transmitted by the base station 12 and received by the wireless device 16 on a first TDD carrier in a fifth subframe (i.e., the fifth subframe of the first TDD carrier starting from the lefthand side of Figure 5). The UL grant is a grant for a UL transmission by the wireless device 16 in a future subframe. In the illustrated example, the UL grant is for the ninth subframe. However, the UL grant is valid for either the first carrier or a second carrier. At the point when the UL grant is transmitted, the carrier for the granted transmission has not yet been determined.

In the illustrated example, in the subframe immediately preceding the subframe for the granted UL transmission, the base station 12 (or alternatively some other radio access node) transmits an indication (and the wireless device 16 receives the indication). The indication indicates that the next subframe on the first carrier is a UL subframe. This indication is, in this example, transmitted on the second carrier, but could alternatively be transmitted on the first carrier or some other carrier. By waiting to transmit the indication in the subframe (the eighth subframe in this example) immediately preceding the subframe for the granted UL transmission, the scheduler (of the radio access node) is able to delay the decision as to which of the carriers it desires to use for DL and which of the carriers it desires to use for UL up until the subframe immediately preceding the granted UL transmission. The scheduler can base this choice on quality measures, DL and/or UL load, re-transmission need, etc. Based on this indication, the wireless device 16 determines that the second carrier is to be used for the granted UL transmission. In accordance with this determination, the wireless device 16 then uses the second carrier for the granted UL transmission.

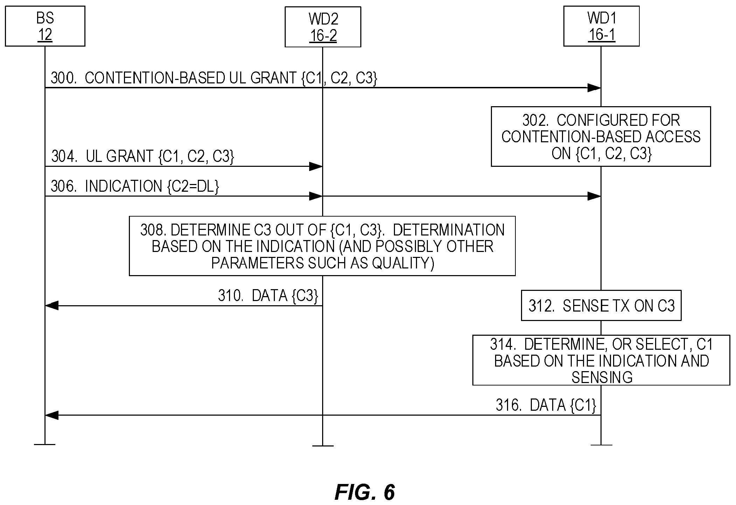

Figure 6 illustrates the operation of the base station 12 and the wireless device 16 according to some embodiments of the present disclosure. In the example process of Figure 6, aspects of the present disclosure are described in a scenario in which a first wireless device (referred to as wireless device 16-1) using contention-based access co-exists with a scheduled wireless device (referred to as wireless device 16-2) on three half-duplex carriers, referred to as carriers C1, C2, and C3. In other words, Figure 6 illustrates two wireless devices 16-1 and 16-2 implementing embodiments of the present disclosure, wherein the wireless device 16-1 is configured for contention-based access to three carriers operating in dynamic TDD mode and the other wireless device 16-2 is dynamically scheduled.

As illustrated, the base station 12 transmits and the wireless device 16-1 receives a contention-based UL grant that grants a UL transmission for the wireless device 16-1 on any of the three carriers C1, C2 and C3 (step 300). In other words, the contention-based UL grant specifies that the wireless device 16-1 is permitted, or granted, a UL transmission on any of the three carriers C1, C2, and C3 provided that LBT is successful (i.e., the wireless device 16-1 is permitted to transmit on any of the carriers C1, C2, and C3 provided that an LBT procedure performed by the wireless device 16-1 for that carrier determines that the carrier is clear, or free for transmission). This means that the wireless device 16-1 is allowed to perform a transmission on one of the carriers provided that the wireless device 16-1 senses the carrier to be clear, or free for transmission. The wireless device 16-1 configures itself for transmission on any of the carriers C1, C2, and C3 upon receipt of the UL grant (step 302). For example, at the appropriate time, the wireless device 16-1 prepares for transmission of the desired UL data during the scheduled subframe. This preparation may include, for example, conventional baseband processing (e.g., encoding, modulation, etc.) to prepare the desired transmission of UL data in the scheduled subframe.

The scheduler residing in the base station 12 coordinates DL and UL transmissions on all of the carriers and has a desire to leave one of the carriers free for contention-based access (when contention-based transmissions occur the scheduler does not know). The scheduler residing in the base station 12 sends a UL grant (i.e., a contention-free UL grant or, more specifically, a UL grant without LBT) to the wireless device 16-2 granting a UL transmission for the wireless device 16-2 (step 304). The scheduler residing in the base station 12 also sends an indication that C2 is used for DL in the scheduled subframe and the wireless devices 16-1 and 16-2 receive this indication (step 306). Note that there may be known timing relation between the transmission of the indication and the subframe to which the indication applies. This timing relation may be flexible. In other embodiments, the indication explicitly indicates the subframe to which the indication applies. In this step, one or more other parameters may be optionally used to determine that the carrier C3 is to be used. Else, the carrier may be determined randomly out of the potential carriers C1 and C3. Based on the indication, the wireless device 16-2 determines that C3 is to be used for its granted UL transmission (step 308). The wireless device 16-2 then transmits its UL transmission of data on C3 (step 310).

The wireless device 16-1 senses the transmission of the wireless device 16-2 on C3 via an LBT procedure on C3 (step 312). The wireless device 16-1 determines that C1 is to be used for its granted UL transmission based on: (a) the indication (received in step 306) that C2 is used for DL and (b) sensing that C3 is busy in step 312 and sensing that C1 is clear or free (via an LBT procedure for C1) (step 314). The wireless device 16-1 then performs its UL transmission of data on C1 (step 316).

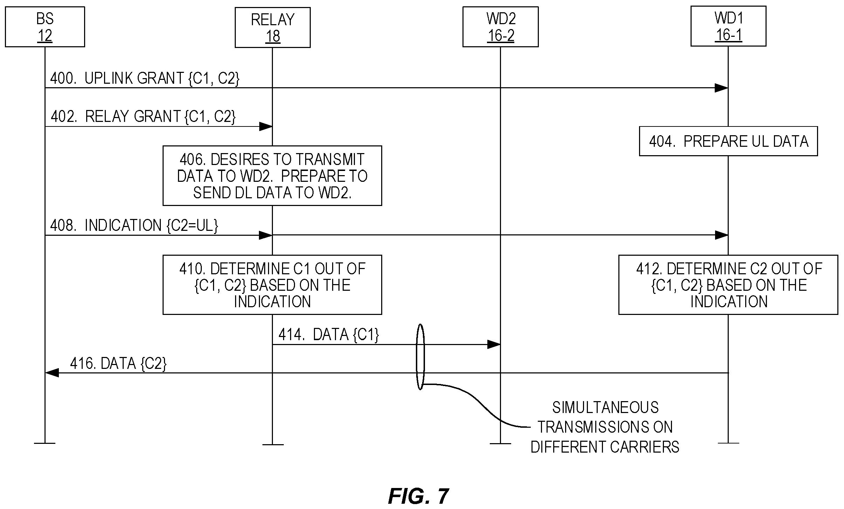

In the embodiment of Figure 6, embodiments of the present disclosure are implemented with respect to UL grants for the wireless devices 16-1 and 16-2. Figure 7 illustrates one example of a process in which embodiments of the present disclosure are implemented with respect to a relay grant and relay transmission of a relay node 18 according to some embodiments of the present disclosure. As will be appreciated by one of ordinary skill in the art, the cellular communication network 10 of Figure 3 may further include the relay node 18, e.g., for coverage enhancement. In this example, the relay node 18 operates to receive DL transmissions from the base station 12 and retransmit the DL transmissions on, in this example, scheduled or granted resources. Here, the base station 12 coordinates transmissions to and from the relay node 18, a first wireless device 16-1, and a second wireless device 16-2. The scenario is such that the base station 12 can transmit to and receive from the relay node 18 and the wireless device 16-1 directly, but can only transmit to and receive from the wireless device 16-2 via the relay node 18. Note that the relay node 18 may be a radio access node having relay functionality, a dedicated relay node in the radio access network, or a wireless device, 16 having relay functionality. It should also be noted that while this example uses the base station 12, the relay node 18, and the wireless devices 16-1 and 16-2, the concepts may be utilized more generally with respect to any four radio nodes implementing the described functionality.

In this scenario, "DL" refers to transmissions from the base station 12 to the wireless device 16-1, transmissions from the base station 12 to the relay node 18, or transmissions from the relay node 18 to the wireless device 16-2. "UL" refers to transmissions from the wireless device 16-2 to the relay node 18, transmissions from relay node 18 to the base station 12, or transmissions from the wireless device 16-1 to the base station 12.

The process of Figure 7 enables simultaneous transmissions on three carriers, C1, C2, and C3. As illustrated, the base station 12 transmits a UL grant to wireless device 16-1 that grants, or permits, a UL transmission of data from the wireless device 16-1 on any of carriers C1 and C2 (step 400). The base station 12 also transmits a relay grant to the relay node 18 that grants, or permits, a DL transmission by the relay node 18 on any of carriers C1 and C2 (step 402). Note, however, that the grant may alternatively be a grant for a UL reception by the relay node 18 of a UL transmission from, e.g., the wireless device 16-2. As another alternative, the grant is a relay grant that delegates, to the relay node 18, a decision as to whether to transmit a DL transmission of data or receive a UL transmission of data on any of the set of two or more TDD carriers.

In the example of Figure 7, the specific carrier to be used by the wireless device 16-1 for its granted UL transmission is, at this time instance, undecided. Likewise, the specific carrier to be used by the relay node 18 for its DL transmissions is, at this time instance, undecided. The wireless device 16-1 prepares UL data for transmission on any of the carriers C1 and C2 (step 404). The relay node 18 desires to transmit DL data to the wireless device 16-2 and prepares DL data for transmission to the wireless device 16-2 on any of the carriers C1 and C2 (step 406).

The base station 12 transmits, and the relay node 18 and the wireless device 16-1 receive, an indication that indicates that C2 is used for UL transmission in the scheduled subframe (where the grants in steps 400 and 402 grant the respective transmissions in the same subframe and this subframe is referred to as the "scheduled subframe") (step 408). The relay node 18 determines to that C1 is to be used for its DL transmission to the wireless device 16-2 based on the relay grant and the indication received in step 408 (step 410). Similarly, the wireless device 16-1 determines to that C2 is to be used for its UL transmission based on the UL grant and the indication received in step 408 (step 412). The relay node 18 transmits its granted DL transmission to the wireless device 16-2 on C1 (step 414), and the wireless device 16-1 transmits its granted UL transmission on C2 (step 416). In this manner, the relay node 18 and the wireless device 16-1 perform simultaneous transmissions according to their respective grants on their respective selected carriers.

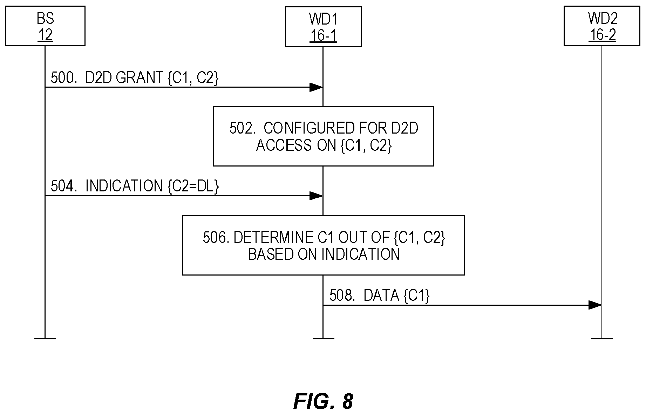

The examples of Figures 6 and 7 illustrate aspects of the present disclosure with respect to UL transmissions and, in some embodiments, DL transmissions. Figure 8 illustrates an example in which aspects of the present disclosure are implemented with respect to D2D communication between two wireless devices 16. As illustrated, in the example of Figure 8, the base station 12 transmits a D2D grant to a first wireless device 16-1 that grants a D2D transmission of data from the wireless device 16-1 on any of carriers C1 and C2 (step 500). The wireless device 16-1 configures itself for D2D transmission according to the D2D grant on any of carriers C1 and C2 (step 502). The base station 12 sends an indication to the wireless device 16-1 that C2 is used for DL in the scheduled subframe for the granted D2D transmission (step 504). Based on the indication, the wireless device 16-1 determines that C1 is to be used as the carrier for the granted D2D transmission (step 506). In this example, UL resources are preferred or potentially even required to be used for D2D transmission, e.g., in order to mitigate DL interference (i.e., interference to the DL from the base station 12 to other wireless devices). The wireless device 16-1 then transmits the D2D transmission on C1 in accordance with the D2D grant (step 508).

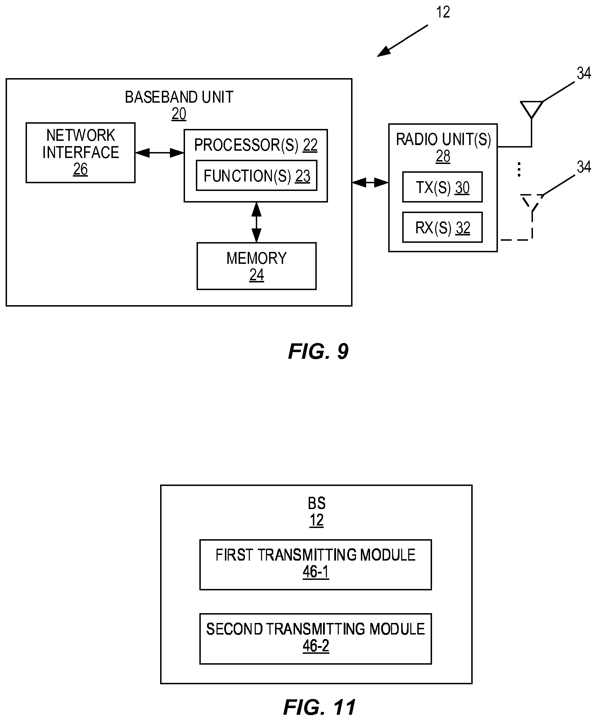

Figure 9 is a schematic block diagram of the base station 12 according to some embodiments of the present disclosure. This discussion is equally applicable to other types of radio access nodes such as the relay node 18. Further, other types of network nodes may have similar architectures (particularly with respect to including processor(s), memory, and a network interface). As illustrated, the base station 12 includes a baseband unit 20 that includes one or more processors 22 (e.g., Central Processing Units (CPUs), Application Specific Integrated Circuits (ASICs), Field Programmable Gate Arrays (FPGAs), and/or the like), memory 24, and a network interface 26 as well as one or more radio units 28 that each includes one or more transmitters 30 and one or more receivers 32 coupled to one or more antennas 34. The one or more processors 22 operate to provide one or more functions 23 as described herein (e.g., a function that causes a grant to be transmitted, a function that causes an indication of the carrier mode of a carrier to be transmitted, and/or some other functions described herein). In some embodiments, the function(s) 23 are implemented in software that is stored, e.g., in the memory 24 and executed by the one or more processors 22.

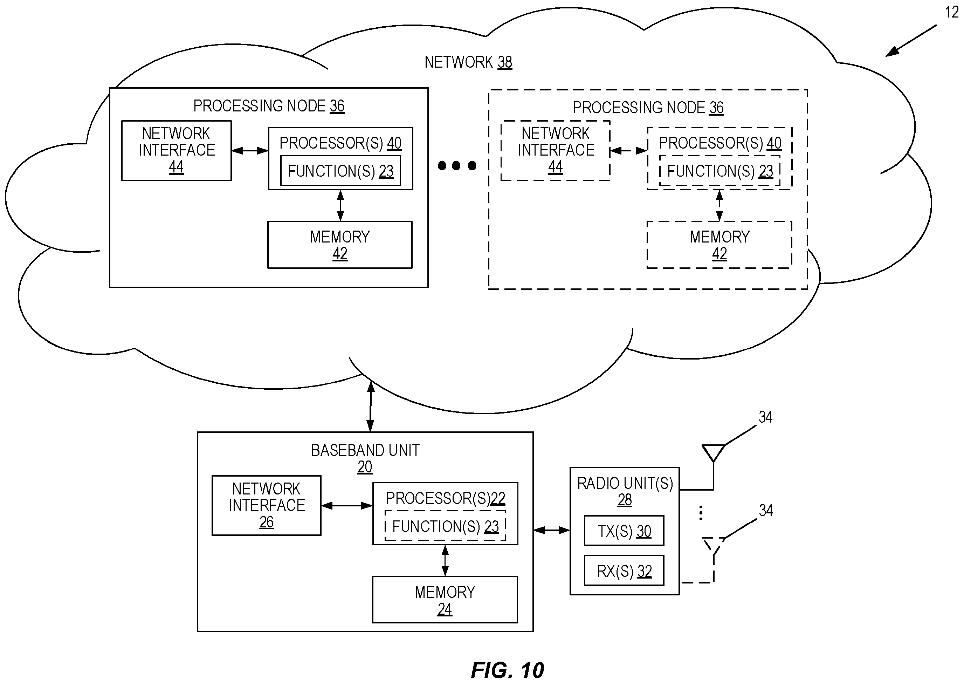

Figure 10 is a schematic block diagram that illustrates a virtualized embodiment of the base station 12 according to some embodiments of the present disclosure. This discussion is equally applicable to other types of radio access nodes such as the relay node 18. Further, other types of network nodes may have similar architectures (particularly with respect to including processor(s), memory, and a network interface).

As used herein, a "virtualized" radio access node is a radio access node in which at least a portion of the baseband functionality of the base station is implemented as a virtual component (e.g., via a virtual machine(s) executing on a physical processing node(s) in a network(s)). As illustrated, the base station 12 includes the baseband unit 20 that includes the one or more processors 22 (e.g., CPUs, ASICs, FPGAs, and/or the like), the memory 24, and the network interface 26 as well as the one or more radio units 28 that each includes the one or more transmitters 30 and the one or more receivers 32 coupled to the one or more antennas 34, as described above. The baseband unit 20 is connected to the radio unit(s) 28 via, for example, an optical cable or the like. The baseband unit 20 is connected to one or more processing nodes 36 coupled to or included as part of a network(s) 38 via the network interface 26. Each processing node 36 includes one or more processors 40 (e.g., CPUs, ASICs, FPGAs, and/or the like), memory 42, and a network interface 42.

In this example, the functions 23 of the base station 12 described herein (e.g., causing the transmission of a grant for a transmission on any one of a set of two or more TDD carriers, causing the transmission of an indication of the carrier mode of at least one of the TDD carriers, etc.) are implemented at the one or more processing nodes 36 or distributed across the baseband unit 20 and the one or more processing nodes 36 in any desired manner. In some particular embodiments, some or all of the functions 23 of the base station 12 described herein are implemented as virtual components executed by one or more virtual machines implemented in a virtual environment(s) hosted by the processing node(s) 36. As will be appreciated by one of ordinary skill in the art, additional signaling or communication between the processing node(s) 36 and the baseband unit 20 is used in order to carry out at least some of the desired functions such as, for example, transmitting the grant and/or transmitting the indication of the carrier mode of at least one carrier. Notably, in some embodiments, the baseband unit 20 may not be included, in which case the radio unit(s) 28 communicate directly with the processing node(s) 36 via an appropriate network interface(s).

In some embodiments, a computer program including instructions which, when executed by at least one processor, causes the at least one processor to carry out the functionality of a radio access node (e.g., a base station 12 or a relay node 18) or a node (e.g., a processing node 36) implementing one or more of the functions 23 of the radio access node in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

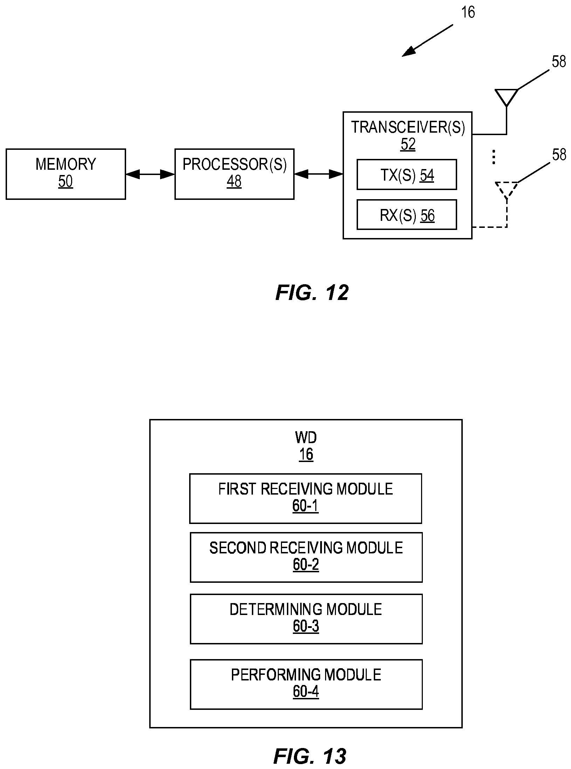

Figure 11 is a schematic block diagram of the base station 12 according to some other embodiments of the present disclosure. The base station 12 includes one or more modules 46, each of which is implemented in software. The module(s) 46 provide the functionality of the base station 12 described herein. For example, in some embodiments, the module(s) 46 include a first transmitting module 46-1 that operates to transmit (via an associated transmitter(s) of the base station 12, which is not shown), to a radio node (e.g., the wireless device 16 or the relay node 18), a grant that grants a communication of data on any of a set of two or more TDD carriers, according to any of the embodiments described herein. The module(s) 46 also include a second transmitting module 46-2 that operates to transmit (via an associated transmitter(s) of the base station 12, which is not shown), to the radio node, an indication that indicates a carrier mode of one or more TDD carriers in the set of two or more TDD carriers, according to any of the embodiments described herein. Note that other types of radio access nodes may have similar architectures as shown in Figure 12 for the base station 12. The base station 12 is adapted to perform a method described in the present disclosure. To this end, one or more of the modules 46 may be adapted to perform the respective method steps. The base station 12 may also comprise one or more further modules adapted to perform such steps.

Figure 12 is a schematic block diagram of the wireless device 16 (e.g., a UE) according to some embodiments of the present disclosure. As illustrated, the wireless device 16 includes one or more processors 48 (e.g., CPUs, ASICs, FPGAs, and/or the like), memory 50, and one or more transceivers 52 each including one or more transmitters 54 and one or more receivers 56 coupled to one or more antennas 58. In some embodiments, the functionality of the wireless device 16 described above may be fully or partially implemented in software that is, e.g., stored in the memory 50 and executed by the processor(s) 48.

In some embodiments, a computer program including instructions which, when executed by at least one processor, causes the at least one processor to carry out the functionality of the wireless device 16 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 13 is a schematic block diagram of the wireless device 16 according to some other embodiments of the present disclosure. The wireless device 16 includes one or more modules 60, each of which is implemented in software. As an example, in some embodiments, the one or more modules 60 include a first receiving module 60-1 that operates to receive a grant that grants a communication of data on any of a set of two or more TDD carriers and a second receiving module 60-2 that operates to receive an indication that indicates a carrier mode of one or more TDD carriers in the set of two or more TDD carriers, according to any of the embodiments described herein. The modules 60 further include a determining module 60-3 that operates to determine, based on the indication, one or more TDD carriers of the set of two or more TDD carriers to use for the communication in accordance with the grant, according to any of the embodiments described herein. The modules 60 also include a performing module 60-4 that operates to perform the communication of the data on the determined one or more TDD carriers in accordance with the grant, according to any of the embodiments described herein. The module(s) 60 may also include other modules that perform other functions of the wireless device 16 described herein. The wireless device 16 is adapted to perform a method described in the present disclosure. To this end, one or more of the modules 60 may be adapted to perform the respective method steps. The wireless device 16 may also comprise one or more further modules adapted to perform such steps.

It is noted that the concepts described in Figures 11, 13 for the wireless device 16 equally apply to the relay node 18. That is to say, the relay node 18 may be embodied like the wireless device 16 shown in Figures 11, 13.

While not being limited to or by any particular advantage, using embodiments of the present disclosure described herein, it is possible to pre-schedule UL transmissions in a dynamic TDD system without restricting future scheduler decisions.

Further, if a system has a number (L>2) of component carriers, the wireless device 16 can be instructed to prepare a transmission with a specific set of parameters well in advance for the wireless device 16 to be able to perform the required signal processing. The final decision on which component carrier that the wireless device 16 will be transmitting the data on can be made at a later time. This relaxes the requirements of the processing capability of the wireless device 16.

Embodiments of the present disclosure can be used to enable fast user prioritization, e.g., by enforcing certain users and/or wireless devices 16 to perform a LBT procedure when determining which component carrier to use.

Embodiments of the present disclosure also provide a possibility to revoke or delay a previously assigned UL transmission grant, e.g., by explicitly informing the pre-scheduled wireless device 16 that all component carriers are used in the DL direction (or by not informing the wireless device 16 of which component carrier that may be used for UL transmissions). This increases the flexibility of the scheduler and enables more efficient usage of system resources.

Those skilled in the art will recognize improvements and modifications to the embodiments of the present disclosure. All such improvements and modifications are considered within the scope of the concepts disclosed herein and the claims that follow.

## Claims

1. A method of a wireless device (16, 18) operating in a multi-carrier dynamic Time Division Duplexing, TDD, cellular communications network (10), comprising:
receiving (200) a grant that grants a communication of data on any of a set of two or more TDD carriers, wherein receiving (200) the grant comprises receiving (200) the grant in a first subframe, wherein the communication granted by the grant is for a second subframe that is subsequent, in time, to the first subframe;
receiving (202) an indication that indicates a carrier mode of one or more TDD carriers in the set of two or more TDD carriers, wherein the indication is received in a third subframe that is subsequent, in time, to the first subframe and prior, in time, to the second subframe, and wherein the carrier mode indicated is one of uplink, UL, transmit direction or downlink, DL, transmit direction of the one or more TDD carriers in the set of two or more TDD carriers;
determining (204), based on the indication, one or more TDD carriers of the set of two or more TDD carriers to use for the communication in accordance with the grant; and
performing (206) the communication of the data on the determined one or more TDD carriers in accordance with the grant.

2. The method of claim 1, wherein receiving (202) the indication comprises receiving (202) the indication via a downlink control information message.

3. The method of any of claims 1 to 2, wherein the set of two or more TDD carriers is identified in the grant, or is pre-configured.

4. The method of any of claims 1 to 3, wherein the wireless device (16, 18) is a wireless device (16), and the grant is an uplink grant that grants an uplink transmission of data, and the grant is a Device-to-Device, D2D, grant that grants transmission of data from the wireless device to another wireless device (16).

5. The method of any of claims 1 to 3, wherein the wireless device (16, 18) is a relay node (18), and the grant is a relay grant that grants downlink transmission of data to a wireless device (16), or the grant is a relay grant that grants reception of an uplink transmission of data from a wireless device (16) to the relay node (18), or the grant is a relay grant that delegates, to the relay node (18), a decision as to whether to transmit a downlink transmission of data to a wireless device (16) or receive an uplink transmission of data from a wireless device (16) on any of the set of two or more TDD carriers.

6. The method of any of claims 1 to 5, wherein determining (204) the one or more TDD carriers comprises determining the one or more TDD carriers of the set of two or more TDD carriers based on the indication and at least one additional parameter, and preferably the at least one additional parameter comprises signal quality, or the at least one additional parameter comprises a Listen-Before-Talk, LBT, result that is indicative of whether at least one of the TDD carriers in the set of two or more TDD carriers is free for transmission.

7. The method of any of claims 1 to 6, wherein the indication is an explicit indication or an implicit indication.

8. The method of any of claims 1 to 3 and 6 to 7 wherein the grant is a grant for a transmission of data on any of the set of two or more TDD carriers, or the grant is a grant for a reception of data on any of the set of two or more TDD carriers.

9. A wireless device (16, 18) operating in a multi-carrier dynamic Time Division Duplexing, TDD, cellular communications network (10), comprising:
one or more transmitters (28, 42);
one or more receivers (30, 44);
one or more processors (20, 36); and
memory (22, 38) storing instructions executable by the one or more processors (20, 36) whereby the wireless device (16, 18) is operable to:
receive, via the one or more receivers (30, 44), a grant that grants a communication of data on any of a set of two or more TDD carriers;
receive, via the one or more receivers (30, 44), an indication that indicates a carrier mode of one or more TDD carriers in the set of two or more TDD carriers, wherein receive the grant in a first subframe, wherein the communication granted by the grant is for a second subframe that is subsequent, in time, to the first subframe;
determine, based on the indication, one or more TDD carriers of the set of two or more TDD carriers to use for the communication in accordance with the grant, wherein the indication is received in a third subframe that is subsequent, in time, to the first subframe and prior, in time, to the second subframe, and wherein the carrier mode indicated is one of uplink, UL, transmit direction or downlink, DL, transmit direction of the one or more TDD carriers in the set of two or more TDD carriers; and
perform the communication of the data, via the one or more transmitters (28, 42) or the one or more receivers (30, 44), on the determined one or more TDD carriers in accordance with the grant.

10. The wireless device (16, 18) of claim 9, wherein the wireless device (16, 18) is a relay node (18), and the grant is a relay grant that grants downlink transmission of data to a wireless device (16), or the grant is a relay grant that grants reception of an uplink transmission of data from a wireless device (16) to the relay node (18), or the grant is a relay grant that delegates, to the relay node (18), a decision as to whether to transmit a downlink transmission of data to a wireless device (16) or receive an uplink transmission of data from a wireless device (16) on any of the set of two or more TDD carriers.

11. A computer program comprising instructions which, when executed by at least one processor, cause the at least one processor to carry out the method according to any one of claims 1 to 8.

## Patentansprüche

1. Verfahren einer drahtlosen Vorrichtung (16, 18), die in einem dynamischen Mehrfachträger-Time Division Duplexing-, TDD, -Mobilfunkkommunikationsnetzwerk (10) arbeitet, umfassend:
Empfangen (200) einer Bewilligung, die eine Kommunikation von Daten auf irgendeinem von einem Satz von zwei oder mehr TDD-Trägern gewährt, wobei das Empfangen (200) der Bewilligung das Empfangen (200) der Bewilligung in einem ersten Unterrahmen umfasst, wobei die durch die Bewilligung gewährte Kommunikation für einen zweiten Unterrahmen ist, der sich zeitlich nach dem ersten Unterrahmen befindet;
Empfangen (202) einer Anzeige, die einen Trägermodus von einem oder mehreren TDD-Trägern in dem Satz von zwei oder mehreren TDD-Trägern anzeigt, wobei die Anzeige in einem dritten Unterrahmen empfangen wird, der sich zeitlich nach dem ersten Unterrahmen und zeitlich vor dem zweiten Unterrahmen befindet, und wobei der angezeigte Trägermodus einer von Uplink-, UL, - Senderichtung oder Downlink-, DL, -Senderichtung des einen oder der mehreren TDD-Träger in dem Satz von zwei oder mehreren TDD-Trägern ist;
Bestimmen (204), basierend auf der Anzeige, eines oder mehrerer TDD-Träger des Satzes von zwei oder mehr TDD-Trägern zur Verwendung für die Kommunikation gemäß der Bewilligung; und
Ausführen (206) der Kommunikation der Daten auf den bestimmten ein oder mehreren TDD-Trägern gemäß der Bewilligung.

2. Verfahren nach Anspruch 1, wobei das Empfangen (202) der Anzeige das Empfangen (202) der Anzeige über eine Downlink-Steuerinformationsnachricht umfasst.

3. Verfahren nach einem der Ansprüche 1 bis 2, wobei der Satz von zwei oder mehr TDD-Trägern in der Bewilligung identifiziert wird oder vorkonfiguriert ist.

4. Verfahren nach einem der Ansprüche 1 bis 3, wobei die drahtlose Vorrichtung (16, 18) eine drahtlose Vorrichtung (16) ist und die Bewilligung eine Uplink-Bewilligung ist, die eine Uplink-Übertragung von Daten gewährt, und die Bewilligung eine Device-to-Device-, D2D, -Bewilligung ist, die eine Übertragung von Daten von der drahtlosen Vorrichtung zu einer anderen drahtlosen Vorrichtung (16) gewährt.

5. Verfahren nach einem der Ansprüche 1 bis 3, wobei die drahtlose Vorrichtung (16, 18) ein Weiterleitungsknoten (18) ist und die Bewilligung eine Weiterleitungsbewilligung ist, die eine Downlink-Übertragung von Daten zu einer drahtlosen Vorrichtung (16) gewährt, oder die Bewilligung eine Weiterleitungsbewilligung ist, die den Empfang einer Uplink-Übertragung von Daten von einer drahtlosen Vorrichtung (16) zu dem Weiterleitungsknoten (18) gewährt, oder die Bewilligung eine Weiterleitungsbewilligung ist, die eine Entscheidung darüber, ob auf irgendeinem von dem Satz von zwei oder mehr TDD-Trägern eine Downlink-Übertragung von Daten an eine drahtlose Vorrichtung (16) übertragen oder eine Uplink-Übertragung von Daten von einer drahtlosen Vorrichtung (16) empfangen werden soll, an den Weiterleitungsknoten (18) delegiert.

6. Verfahren nach einem der Ansprüche 1 bis 5, wobei das Bestimmen (204) des einen oder der mehreren TDD-Träger das Bestimmen des einen oder der mehreren TDD-Träger des Satzes von zwei oder mehr TDD-Trägern basierend auf der Anzeige und mindestens einem zusätzlichen Parameter umfasst und der mindestens eine zusätzliche Parameter bevorzugt eine Signalqualität umfasst oder der mindestens eine zusätzliche Parameter ein Listen-Before-Talk-, LBT, -Ergebnis umfasst, das anzeigt, ob mindestens einer der TDD-Träger in dem Satz von zwei oder mehr TDD-Trägern für eine Übertragung frei ist.

7. Verfahren nach einem der Ansprüche 1 bis 6, wobei die Anzeige eine explizite Anzeige oder eine implizite Anzeige ist.

8. Verfahren nach einem der Ansprüche 1 bis 3 und 6 bis 7, wobei die Bewilligung eine Bewilligung für eine Übertragung von Daten auf irgendeinem des Satzes von zwei oder mehr TDD-Trägern ist oder die Bewilligung eine Bewilligung für einen Empfang von Daten auf irgendeinem des Satzes von zwei oder mehr TDD-Trägern ist.

9. Drahtlose Vorrichtung (16, 18), die in einem dynamischen Mehrfachträger-Time Division Duplexing-, TDD, - Mobilfunkkommunikationsnetzwerk (10) arbeitet, umfassend:
einen oder mehrere Sender (28, 42);
einen oder mehrere Empfänger (30, 44);
einen oder mehrere Prozessoren (20, 36); und
Speicher (22, 38), der Befehle speichert, die von einem oder mehreren Prozessoren (20, 36) ausführbar sind, wobei die drahtlose Vorrichtung (16, 18) betriebsfähig ist zum:
Empfangen, über den einen oder die mehreren Empfänger (30, 44), einer Bewilligung, die eine Kommunikation von Daten auf irgendeinem von einem Satz von zwei oder mehr TDD-Trägern gewährt;
Empfangen, über den einen oder die mehreren Empfänger (30, 44) einer Anzeige, die einen Trägermodus von einem oder mehreren TDD-Trägern in dem Satz von zwei oder mehr TDD-Trägern anzeigt, wobei die Bewilligung in einem ersten Unterrahmen empfangen wird, wobei die durch die Bewilligung gewährte Kommunikation für einen zweiten Unterrahmen ist, der sich zeitlich nach dem ersten Unterrahmen befindet;
Bestimmen, basierend auf der Anzeige, von einem oder mehreren TDD-Trägern des Satzes von zwei oder mehr TDD-Trägern, die für die Kommunikation gemäß der Bewilligung zu verwenden sind, wobei die Anzeige in einem dritten Unterrahmen empfangen wird, der sich zeitlich nach dem ersten Unterrahmen und zeitlich vor dem zweiten Unterrahmen befindet, und wobei der angezeigte Trägermodus einer von Uplink-, UL, -Senderichtung oder Downlink- , DL, -Senderichtung des einen oder der mehreren TDD-Träger in dem Satz von zwei oder mehr TDD-Trägern ist; und
Ausführen der Kommunikation der Daten über den einen oder die mehreren Sender (28, 42) oder den einen oder die mehreren Empfänger (30, 44) auf den bestimmten ein oder mehreren TDD-Trägern gemäß der Bewilligung.

10. Drahtlose Vorrichtung (16, 18) nach Anspruch 9, wobei die drahtlose Vorrichtung (16, 18) ein Weiterleitungsknoten (18) ist und die Bewilligung eine Weiterleitungsbewilligung ist, die eine Downlink-Übertragung von Daten zu einer drahtlosen Vorrichtung (16) gewährt, oder die Bewilligung eine Weiterleitungsbewilligung ist, die den Empfang einer Uplink-Übertragung von Daten von einer drahtlosen Vorrichtung (16) zu dem Weiterleitungsknoten (18) gewährt, oder die Bewilligung eine Weiterleitungsbewilligung ist, die eine Entscheidung darüber, ob auf irgendeinem von dem Satz von zwei oder mehr TDD-Trägern eine Downlink-Übertragung von Daten an eine drahtlose Vorrichtung (16) übertragen oder eine Uplink-Übertragung von Daten von einer drahtlosen Vorrichtung (16) empfangen werden soll, an den Weiterleitungsknoten (18) delegiert.

11. Computerprogramm, das Befehle umfasst, die bei Ausführung von mindestens einem Prozessor den mindestens einen Prozessor veranlassen, das Verfahren nach einem der Ansprüche 1 bis 8 auszuführen.

## Revendications

1. Procédé d'un dispositif sans fil (16, 18) fonctionnant dans un réseau de communication cellulaire (10) à duplexage par répartition dans le temps, TDD, dynamique, à porteuses multiples, comprenant :
la réception (200) d'une autorisation qui autorise une communication de données sur l'une quelconque d'un ensemble de deux, ou plus, porteuses TDD, dans lequel la réception (200) de l'autorisation comprend la réception (200) de l'autorisation dans une première sous-trame, dans lequel la communication autorisée par l'autorisation est pour une deuxième sous-trame qui est subséquente, en temps, à la première sous-trame ;
la réception (202) d'une indication qui indique un mode de porteuse d'une ou de plusieurs porteuses TDD dans l'ensemble de deux, ou plus, porteuses TDD, dans lequel l'indication est reçue dans une troisième sous-trame qui est subséquente, en temps, à la première sous-trame et antécédente, en temps, à la deuxième sous-trame, et dans lequel le mode de porteuse indiqué est une de direction de transmission de liaison montante, UL, ou de direction de transmission de liaison descendante, DL, des une ou plusieurs porteuses TDD dans l'ensemble de deux, ou plus, porteuses TDD ;
la détermination (204), sur la base de l'indication, d'une ou de plusieurs porteuses TDD de l'ensemble de deux, ou plus, porteuses TDD à utiliser pour la communication conformément à l'autorisation ; et
la réalisation (206) de la communication des données sur les une ou plusieurs porteuses TDD déterminées conformément à l'autorisation.

2. Procédé selon la revendication 1, dans lequel la réception (202) de l'indication comprend la réception (202) de l'indication par l'intermédiaire d'un message d'informations de commande de liaison descendante.

3. Procédé selon l'une quelconque des revendications 1 à 2, dans lequel l'ensemble de deux, ou plus, porteuses TDD est identifié dans l'autorisation, ou est préconfiguré.

4. Procédé selon l'une quelconque des revendications 1 à 3, dans lequel le dispositif sans fil (16, 18) est un dispositif sans fil (16), et l'autorisation est une autorisation de liaison montante qui autorise une transmission de données de liaison montante, et l'autorisation est une autorisation dispositif-à-dispositif, D2D, qui autorise la transmission de données à partir du dispositif sans fil à un autre dispositif sans fil (16).

5. Procédé selon l'une quelconque des revendications 1 à 3, dans lequel le dispositif sans fil (16, 18) est un nœud de relais (18), et l'autorisation est une autorisation de relais qui autorise la transmission de données de liaison descendante à un dispositif sans fil (16), ou l'autorisation est une autorisation de relais qui autorise la réception d'une transmission de données de liaison montante à partir d'un dispositif sans fil (16) au nœud de relais (18), ou l'autorisation est une autorisation de relais qui délègue, au nœud de relais (18), une décision en ce qui concerne le fait qu'il faut transmettre une transmission de données de liaison descendante à un dispositif sans fil (16) ou recevoir une transmission de données de liaison montante à partir d'un dispositif sans fil (16) sur l'une quelconque de l'ensemble de deux, ou plus, porteuses TDD.

6. Procédé selon l'une quelconque des revendications 1 à 5, dans lequel la détermination (204) des une ou plusieurs porteuses TDD comprend la détermination des une ou plusieurs porteuses TDD de l'ensemble de deux, ou plus, porteuses TDD sur la base de l'indication et d'au moins un paramètre supplémentaire, et de préférence l'au moins un paramètre supplémentaire comprend une qualité de signal, ou l'au moins un paramètre supplémentaire comprend un résultat d'accès multiple avec écoute de porteuse, LBT, qui est indicatif du fait qu'au moins une des porteuses TDD dans l'ensemble de deux, ou plus, porteuses TDD est ou non libre pour la transmission.

7. Procédé selon l'une quelconque des revendications 1 à 6, dans lequel l'indication est une indication explicite ou une indication implicite.

8. Procédé selon l'une quelconque des revendications 1 à 3 et 6 et 7, dans lequel l'autorisation est une autorisation pour une transmission de données sur l'une quelconque de l'ensemble de deux, ou plus, porteuses TDD, ou l'autorisation est une autorisation pour une réception de données sur l'une quelconque de l'ensemble de deux, ou plus, porteuses TDD.

9. Dispositif sans fil (16, 18) fonctionnant dans un réseau de communication cellulaire (10) à duplexage par répartition dans le temps, TDD, dynamique, à porteuses multiples, comprenant :
un ou plusieurs transmetteurs (28, 42) ;
un ou plusieurs récepteurs (30, 44) ;
un ou plusieurs processeurs (20, 36) ; et
une mémoire (22, 38) stockant des instructions exécutables par les un ou plusieurs processeurs (20, 36) moyennant quoi le dispositif sans fil (16, 18) est fonctionnel pour :
recevoir, par l'intermédiaire des un ou plusieurs récepteurs (30, 44), une autorisation qui autorise une communication de données sur l'une quelconque d'un ensemble de deux, ou plus, porteuses TDD ;
recevoir, par l'intermédiaire des un ou plusieurs récepteurs (30, 44), une indication qui indique un mode de porteuse d'une ou de plusieurs porteuses TDD dans l'ensemble de deux, ou plus, porteuses TDD, dans lequel le fait de recevoir l'autorisation se fait dans une première sous-trame, dans lequel la communication autorisée par l'autorisation est pour une deuxième sous-trame qui est subséquente, en temps, à la première sous-trame ;
déterminer, sur la base de l'indication, une ou plusieurs porteuses TDD de l'ensemble de deux, ou plus, porteuses TDD à utiliser pour la communication conformément à l'autorisation, dans lequel l'indication est reçue dans une troisième sous-trame qui est subséquente, en temps, à la première sous-trame et antécédente, en temps, à la deuxième sous-trame, et dans lequel le mode de porteuse indiqué est une de direction de transmission de liaison montante, UL, ou de direction de transmission de liaison descendante, DL, des une ou plusieurs porteuses TDD dans l'ensemble de deux, ou plus, porteuses TDD ; et
réaliser la communication des données, par l'intermédiaire des un ou plusieurs transmetteurs (28, 42) ou des un ou plusieurs récepteurs (30, 44), sur les une ou plusieurs porteuses TDD déterminées conformément à l'autorisation.

10. Dispositif sans fil (16, 18) selon la revendication 9, dans lequel le dispositif sans fil (16, 18) est un nœud de relais (18), et l'autorisation est une autorisation de relais qui autorise la transmission de données de liaison descendante à un dispositif sans fil (16), ou l'autorisation est une autorisation de relais qui autorise la réception d'une transmission de données de liaison montante à partir d'un dispositif sans fil (16) au nœud de relais (18), ou l'autorisation est une autorisation de relais qui délègue, au nœud de relais (18), une décision en ce qui concerne le fait qu'il faut transmettre une transmission de données de liaison descendante à un dispositif sans fil (16) ou recevoir une transmission de données de liaison montante à partir d'un dispositif sans fil (16) sur l'une quelconque de l'ensemble de deux, ou plus, porteuses TDD.

11. Programme d'ordinateur, comprenant des instructions qui, lorsqu'elles sont exécutées par au moins un processeur, font en sorte que l'au moins un processeur réalise le procédé selon l'une quelconque des revendications 1 à 8.
